# EUROPEAN PATENT APPLICATION

(11) **EP 4 322 277 A1**
(43) Date of publication of application: **14.02.2024**
(21) Application number: 22939068.7
(22) Date of filing: 28.04.2022
(51) Int. Cl.: H01M 10/0567, H01M 10/052

(54) **NON-AQUEOUS ELECTROLYTE, SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: WANG, Hansen, Ningde, Fujian 352100 (CN); LIU, Chengyong, Ningde, Fujian 352100 (CN); HUANG, Shengyuan, Ningde, Fujian 352100 (CN); HU, Bobing, Ningde, Fujian 352100 (CN); XIE, Zhangdi, Ningde, Fujian 352100 (CN); LIAO, Shangju, Ningde, Fujian 352100 (CN)
(74) Representative: Gong, Jinping
(86) International application number: PCT/CN2022/089821
(87) International publication number: WO 2023/206216

(57) **Abstract**

Provided are a non-aqueous electrolyte, a secondary battery, a battery module, a battery pack, and an electrical device. The non-aqueous electrolyte includes orthocarbonate, chain carbonate, cyclic carbonate, and lithium salt, a mass content of the orthocarbonate is 10% to 80%, and at least one of the chain carbonate or the cyclic carbonate is fluoride. A central carbon atom of the orthocarbonate is bonded to four oxygen atoms, each of which is further bonded to an alkyl or halogenated alkyl chain, which plays an electron attraction role for lone pair electrons of the oxygen atoms, and increases steric hindrance surrounding the oxygen atoms, weakening the capability of the oxygen atoms in binding to lithium ions, and facilitating SEI film formation dominated by anion decomposition. Highly inorganic SEI film components formed by anion decomposition can promote lithium metal deposition to transform from dendrites to masses, slow down occurrence of corrosion reaction, and therefore improve the safety and the cycle life of a lithium metal secondary battery; and the fluorinated chain carbonate or cyclic carbonate further promotes the safety and the cycle performance of the lithium metal battery.

## Description

### TECHNICAL FIELD

The present disclosure relates to the technical field of batteries, in particular to a non-aqueous electrolyte, a secondary battery, a battery module, a battery pack, and an electrical device.

### BACKGROUND

Under the general background of carbon neutrality, electrification of transportation is a general trend. However, the insufficiency in energy density of a power battery and the resulting "range anxiety" inspire development of a secondary battery system with a higher energy density. Among them, a lithium negative electrode of a lithium metal secondary battery has an extremely low electrode potential (-3.04 V vs. SHE) and an extremely high specific capacity (3,860 mAh/g), and thus the lithium metal secondary battery is currently a best choice for the secondary battery to increase the energy density of the power battery.

However, as an extremely active metal, lithium metal may undergo a continuous side reaction with the electrolyte to form an uneven solid electrolyte interface (SEI) layer and induce dendritic lithium growth. As a result, a large quantity of "dead lithium" losing the electrochemical activity during the cycles is formed, resulting in rapid capacity fading and severe potential safety hazards.

### SUMMARY

The present disclosure provides a non-aqueous electrolyte, a secondary battery, a battery module, a battery pack, and an electrical device and aims at improving the cycle performance of a lithium metal secondary battery.

A first aspect of the present disclosure provides a non-aqueous electrolyte, including orthocarbonate, chain carbonate, cyclic carbonate, and a lithium salt. A mass content of the orthocarbonate is 10% to 80%; and at least one of the chain carbonate or the cyclic carbonate is fluoride.

In the non-aqueous electrolyte of the present disclosure, a central carbon atom of the orthocarbonate is bonded to four oxygen atoms, each of which is further bonded to an alkyl or halogenated alkyl chain; the alkyl or halogenated alkyl chain plays an electron attraction role for lone pair electrons of the oxygen atom, and increases steric hindrance surrounding the oxygen atom, weakening the capability of the oxygen atoms in binding to lithium ions. As a result, the degree of participation of anions in the lithium salt in a lithium-ion solvation sheath in the electrolyte is greatly increased, and SEI film formation dominated by anion decomposition is promoted. Highly inorganic SEI film components formed by anion decomposition may promote lithium metal deposition to transform from dendrites to masses, inhibit formation of dead lithium, reduce a specific surface area of lithium metal deposition, slow down occurrence of corrosion reaction, and thus improve the cycle life and the safety of a lithium metal secondary battery. The chain carbonate mainly plays a role of reducing the viscosity of the electrolyte, and improving the wettability and the ion conductivity. The fluorinated chain carbonate or fluorinated cyclic carbonate may decompose on a surface of the lithium metal negative electrode to form lithium fluoride and other inorganic components which contribute to the lithium metal deposition morphology and then quickly form a passivation layer, thereby further improving the safety and the cycle performance of the lithium metal battery. Moreover, the non-aqueous electrolyte using the orthocarbonate as one of major solvents may react with the lithium metal at 80°C and produce a protective layer capable of effectively passivating the surface of the lithium metal. Therefore, the whole battery forms an open circuit, and the further occurrence of side reactions is hindered, improving the thermal safety of the lithium metal secondary battery.

In any implementation of the first aspect, the mass content of the orthocarbonate in the non-aqueous electrolyte is 15% to 50%, and optionally 20% to 30%. The mass of the orthocarbonate controlled within the above range effectively contributes to an SEI film mainly composed of SEI film components dominated by anion decomposition, and further solves the problem of excessively high viscosity of the electrolyte due to the use of the orthocarbonate.

In any implementation of the first aspect, a mass ratio of the orthocarbonate to the lithium salt is 1:3 to 3:1 and optionally 1:1.5 to 1.5:1. Therefore, the orthocarbonate is further fully used to form SEI films dominated by anion decomposition to the maximum.

In any implementation of the first aspect, a mass content of the chain carbonate is 1% to 80%, optionally 4% to 40%, and further optionally 20% to 30%. The chain carbonate in the above usage amount range is used for reducing the viscosity caused by addition of the orthocarbonate, to further improve the transport effect of lithium ions.

In any implementation of the first aspect, a mass content of the cyclic carbonate is 1% to 80%, optionally 4% to 40%, and further optionally 20% to 30%. The cyclic carbonate in the above usage amount range is used for reducing the viscosity caused by addition of the orthocarbonate, to further improve the transport effect of the lithium ions.

In any implementation of the first aspect, a mass content of the lithium salt is 10% to 70%, optionally 15% to 40%, and further optionally 20% to 30%. The lithium salt is used to form the SEI film components with a more suitable thickness and better structure and performance on the surface of lithium metal, to further improve the cycle performance.

In any implementation of the first aspect, one of the chain carbonate or the cyclic carbonate is fluoride. Therefore, the problem that difficulty in electrolyte wetting due to simultaneous use of two fluorinated carbonates affects a long-term stable cycle of the secondary battery can be solved. Optionally, the above cyclic carbonate is fluorinated cyclic carbonate, and the fluorinated cyclic carbonate decomposes at a negative electrode interface to produce lithium fluoride which facilitates lithium metal cycling.

In any implementation of the first aspect, the orthocarbonate is any one or more selected from the group consisting of compounds having the structure represented by formula I, compounds having the structure represented by formula II, or compounds having the structure represented by formula III, 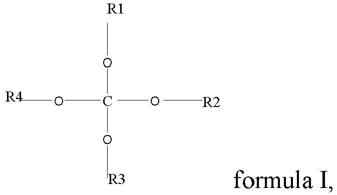 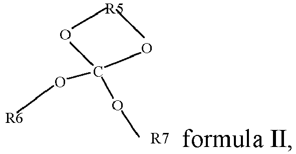 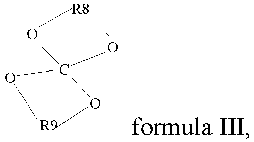 wherein R1 to R4, R6, and R7 each independently represent any one of C1-C10 alkyl or C1-C10 halogenated alkyl; and R5, R8, and R9 each independently represent any one of C1-C10 alkylidene or C1-C10 halogenated alkylidene.

Optionally, the orthocarbonate is any one or more selected from the compounds having the structure represented by formula I, wherein R1 to R4 each independently represent any one of C1-C10 alkyl or C1-C10 halogenated alkyl. Further optionally, the orthocarbonate is any one or more selected from the group consisting of tetramethyl orthocarbonate, tetraethyl orthocarbonate, tetrapropyl orthocarbonate, tetrabutyl orthocarbonate, tetrapentyl orthocarbonate, tetrahexyl orthocarbonate, tetraheptyl orthocarbonate, tetraoctyl orthocarbonate, tetranonyl orthocarbonate, tetradecyl orthocarbonate, fluorinated tetramethyl orthocarbonate, fluorinated tetraethyl orthocarbonate, fluorinated tetrapropyl orthocarbonate, fluorinated tetrabutyl orthocarbonate, fluorinated tetrapentyl orthocarbonate, fluorinated tetrahexyl orthocarbonate, fluorinated tetraheptyl orthocarbonate, fluorinated tetraoctyl orthocarbonate, fluorinated tetranonyl orthocarbonate, and fluorinated tetradecyl orthocarbonate. The orthocarbonate may be selected from the specific substances listed above. The smaller the molecular weight of the orthocarbonate is, the smaller the viscosity is, and the better the ability in dissolving the lithium salt is.

In any implementation of the first aspect, the chain carbonate is any one or more selected from compounds having the structure represented by formula IV, 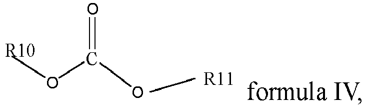 wherein R10 and R11 each independently represent any one of a halogen group, C1-C5 alkyl, or C1-C5 halogenated alkyl. Optionally, the chain carbonate is any one or more selected from the group consisting of dimethyl carbonate, diethyl carbonate, dipropyl carbonate, dibutyl carbonate, diamyl carbonate, ethyl methyl carbonate, methyl propyl carbonate, methyl butyl carbonate, methyl pentyl carbonate, ethyl propyl carbonate, ethyl butyl carbonate, ethyl pentyl carbonate, propyl butyl carbonate, propyl pentyl carbonate, butyl pentyl carbonate, fluorinated dimethyl carbonate, fluorinated diethyl carbonate, fluorinated dipropyl carbonate, fluorinated dibutyl carbonate, fluorinated diamyl carbonate, fluorinated ethyl methyl carbonate, fluorinated methyl propyl carbonate, fluorinated methyl butyl carbonate, fluorinated methyl pentyl carbonate, fluorinated ethyl propyl carbonate, fluorinated ethyl butyl carbonate, fluorinated ethyl pentyl carbonate, fluorinated propyl butyl carbonate, fluorinated propyl pentyl carbonate, and fluorinated butyl pentyl carbonate. The viscosities of the above chain carbonates are smaller than those of cyclic carbonates. Especially, the chain carbonates with small molecular weights may more effectively reduce the viscosity of the electrolyte, and improve the wettability and the ion conductivity of the electrolyte.

In any implementation of the first aspect, the cyclic carbonate is any one or more selected from compounds having the structure represented by formula V, 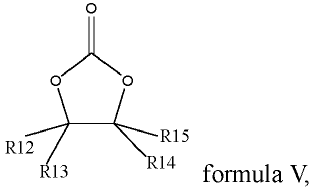 wherein R12 to R15 each independently represent any one of a halogen group, C1-C3 alkyl, or C1-C3 halogenated alkyl. Optionally, the cyclic carbonate is any one or more selected from the group consisting of ethylene carbonate, fluorinated ethylene carbonate, difluoroethylene carbonate, propylene carbonate, fluorinated propylene carbonate, difluoropropylene carbonate, and trifluoropropylene carbonate. Among them, the fluorinated cyclic carbonates are more prone to decompose at the negative electrode interface to produce lithium fluoride and other relevant inorganic components that facilitate the cycling of the lithium metal, better improving the cycle capability of the battery.

In any implementation of the first aspect, the lithium salt is any one or more selected from the group consisting of lithium bis(fluorosulfonyl)imide (LiFSI), lithium bis(trifluoromethanesulphonyl)imide (LiTFSI), lithium bis(pentafluoroethanesulfonyl)mide (LiBETI), lithium hexafluorophosphate (LiPF₆), lithium perchlorate (LiClO₄), lithium tetrafluoroborate (LiBF₄), lithium hexafluoroarsenate (LiAsF₆), lithium trifluoromethanesulfonate (LiCF₃SO₃), lithium bis(oxalate)borate (LiBOB), and lithium difluoro(oxalato) borate (LiDFOB). The above lithium salts each have its own advantages. Among them, lithium fluorinated sulfonimides have a higher thermal decomposition temperature and are less sensitive to water, which may further improve the safety performance of the battery to a certain extent.

In some implementations of the first aspect, the orthocarbonate is tetramethyl orthocarbonate or tetraethyl orthocarbonate; the chain carbonate is any one of dimethyl carbonate, diethyl carbonate, fluorinated dimethyl carbonate, or fluorinated diethyl carbonate; the cyclic carbonate is any one selected from fluorinated ethylene carbonate, fluorinated propylene carbonate, or difluoropropylene carbonate; and the lithium salt is lithium bis(fluorosulfonyl)imide or lithium bis(trifluoromethanesulphonyl)imide. Further optionally, the orthocarbonate is tetramethyl orthocarbonate; the chain carbonate is dimethyl carbonate; the cyclic carbonate is fluorinated ethylene carbonate; and the lithium salt is selected from lithium bis(fluorosulfonyl)imide or lithium bis(trifluoromethanesulphonyl)imide. With the above combination of the substances, the substances may further cooperate with each other on the basis of fully exerting their respective effects, thereby improving the cycle performance and the safety of the lithium metal secondary battery.

A second aspect of the present disclosure provides a secondary battery, including a positive electrode plate, a negative electrode plate, an electrolyte, and a separator. The electrolyte is any non-aqueous electrolyte described above; and the negative electrode plate includes lithium metal. The non-aqueous electrolyte of the present disclosure is less corrosive to the negative electrode plate, which improves the safety and the cycle performance of the secondary battery.

In any implementation of the second aspect, the negative electrode plate includes a current collector and a negative electrode active layer; the negative electrode active layer is lithium metal or lithium alloy; and optionally, the lithium alloy includes any one of tin, zinc, aluminum, magnesium, silver, gold, gallium, indium, foil, boron, carbon, or silicon; and lithium metal.

A third aspect of the present disclosure provides a battery module, including a secondary battery which is any secondary battery in the second aspect.

A fourth aspect of the present disclosure provides a battery pack, including a battery module which is any battery module in the third aspect.

A fifth aspect of the present disclosure provides an electrical device, including a secondary battery, a battery module, or a battery pack. The secondary battery is any secondary battery in the second aspect; the battery module is any battery module in the third aspect; and the battery pack is any battery pack in the fourth aspect.

Due to the composition of the non-aqueous electrolyte of the present disclosure, the secondary battery, the battery module, the battery pack, and the electrical device of the present disclosure all have high safety and high cycle performance.

### BRIEF DESCRIPTION OF DRAWINGS

In order to more clearly illustrate the technical solutions of embodiments of the present disclosure, the drawings which are required to be used in the embodiments of the present disclosure will be briefly described below. It is apparent that the drawings described below are some embodiments of the present disclosure, and those of ordinary skill in the art may be obtain other drawings based on the accompanying drawings without inventive effort.
FIG. 1 is a schematic diagram of a secondary battery according to one implementation of the present disclosure;
FIG. 2 is an exploded diagram of the secondary battery as shown in FIG. 1 according to one implementation of the present disclosure;
FIG. 3 is a schematic diagram of a battery module according to one implementation of the present disclosure;
FIG. 4 is a schematic diagram of a battery pack according to one implementation of the present disclosure;
FIG. 5 is an exploded diagram of the battery pack as shown in FIG. 4 according to one implementation of the present disclosure;
FIG. 6 is a schematic diagram of an electrical device using a secondary battery as a power supply according to one implementation of the present disclosure;
FIG. 7 is a diagram showing charge-discharge cycle test results of a Li-Li button battery at different current densities according to Embodiment 1 of the present disclosure;
FIG. 8 is a diagram showing impedance test results of the Li-Li button battery according to Embodiment 1 at a room temperature;
FIG. 9 is a diagram showing impedance test results of the Li-Li button battery according to Embodiment 1 after being placed at 80°C for 3 h; and
FIG. 10 is a plot of a cycling voltage of a liquid lithium metal secondary battery according to Embodiment 1, wherein an ambient temperature for the cycling of a battery cell was set at 25°C; the charge-discharge cycling was performed at a rate of 0.5 C (i.e., 70 mA); and cut-off voltages for charging and discharging were set at 3.65 V and 2.80 V, respectively.

### Reference numerals:

1. battery pack; 2. upper case body; 3. lower case body; 4. battery module; 5. secondary battery; 51. housing; 52. electrode assembly; 53. top cover assembly.

In the drawings, the figures are not drawn to scale.

### DESCRIPTION OF EMBODIMENTS

The specific implementations of the present disclosure will be further described in detail with reference to the accompanying drawings and the embodiments. The detailed description of the following embodiments and the accompanying drawings is used to illustrate the principles of the present disclosure, but not to limit the scope of the present disclosure, that is, the present disclosure is not limited to the described embodiments.

The implementations specifically disclosing the non-aqueous electrolyte, secondary battery, battery module, battery pack, and electrical device of the present disclosure are illustrated below with proper reference to the accompanying drawings. However, there will be cases where unnecessary details are omitted. For example, there are cases where detailed descriptions of well-known matters and repeated descriptions of substantial identical structures are omitted. This is to prevent the following descriptions from becoming unnecessarily lengthy, for ease of understanding to those skilled in the art. In addition, the accompanying drawings and the following descriptions are provided for those skilled in the art to fully understand the present disclosure, and are not intended to limit the subject matter recited in the claims.

The "range" disclosed in the present disclosure is limited in the form of a lower limit and an upper limit. The given range is defined by selecting a lower limit and an upper limit, which limit the boundary of the special range. The range limited in this way can include or not include end values, and can be combined arbitrarily, that is, any lower limit can be combined with any upper limit to form a range. For example, if the ranges from 60 to 120 and from 80 to 110 are listed for specific parameters, it should be understood that the ranges from 60 to 110 and from 80 to 120 are also expected. In addition, if minimum range values of 1 and 2 are listed and maximum range values of 3, 4 and 5 are listed, the following ranges can all be expected: 1 to 3, 1 to 4, 1 to 5, 2 to 3, 2 to 4 and 2 to 5. In the present disclosure, unless otherwise stated, a numerical range "a to b" represents an abbreviated representation of any combination of real numbers between a and b, where a and b are both real numbers. For example, a numerical range "0 to 5" represents that all real numbers between 0 and 5 have been listed herein, but "0 to 5" is only an abbreviated representation of these numerical combinations. Furthermore, if a certain parameter is expressed as an integer ≥ 2, it is equivalent to disclosing the parameter as an integer, for example, 2, 3, 4, 5, 6, 7, 8, 9, 10, 11, or 12, etc.

Unless particularly specified otherwise, all the implementations and optional implementations of the present disclosure can be combined with each other to form new technical solutions.

Unless particularly specified otherwise, all the technical features and optional technical features of the present disclosure can be combined with each other to form new technical solutions.

Unless particularly specified otherwise, all the steps of the present disclosure can be performed in an order, or at random, and preferably, in an order. For example, the method includes steps (a) and (b), indicating that the method may include steps (a) and (b) that are performed in the order or steps (b) and (a) that are performed in the order. For example, the method may also include step (c), indicating that step (c) may be added to the method in any order, for example, the method may include steps (a), (b) and (c), or steps (a), (c) and (b), or steps (c), (a) and (b), etc.

Unless particularly specified otherwise, "comprising" and "including" mentioned in the present disclosure indicate open-ended or closed-ended inclusion. For example, "comprising" and "including" may indicate that other components not listed can be further comprised or included, or only listed components are comprised or included.

Unless particularly specified otherwise, the term "or" is inclusive in the present disclosure. For example, the phrase "A or B" means "A, B, or both of A and B". More specifically, a condition "A or B" is satisfied by any one of the following: A is true (or present) and B is false (or not present), A is false (or not present) and B is true (or present), and both A and B is true (or present).

The inventor noted that the design and optimization of the electrolyte may significantly improve the cycle performance and safety performance of the lithium metal negative electrode, which is the core and key to implement the lithium metal secondary battery. In recent years, various design ideas for an electrolyte have been proposed, including high concentration electrolyte, locally high concentration electrolyte, an electrolyte in which various lithium salts are blended, a perfluorinated electrolyte, etc. With these design methods, lithium metal growth turns from dendrites to masses, which greatly reduces the risk of a short circuit caused by puncturing of the separator, and also reduces a specific surface area of lithium metal deposition, slowing down the corrosion reaction, and improving the cycle performance of lithium metal negative electrode. However, these design schemes still have the problems such as high cost and insufficient cycle performance. Therefore, further optimization on the composition of the electrolyte is of central importance for improving the cycle performance and safety performance of the lithium metal secondary battery, and realizing its commercialization.

A first aspect of the present disclosure provides a non-aqueous electrolyte, including orthocarbonate, chain carbonate, cyclic carbonate, and a lithium salt. A mass content of the orthocarbonate is 10% to 80%; and at least one of the chain carbonate or the cyclic carbonate is fluoride.

A central carbon atom of the orthocarbonate in the non-aqueous electrolyte of the present disclosure is bonded to four oxygen atoms, each of which is further bonded to an alkyl or halogenated alkyl chain; the alkyl or halogenated alkyl chain plays an electron attraction role for lone pair electrons of the oxygen atom, and increases steric hindrance surrounding the oxygen atoms, weakening the capability of the oxygen atoms in binding to lithium ions. As a result, the degree of participation of anions in the lithium salt in a lithium ion solvation sheath in the electrolyte is greatly increased, and SEI film formation dominated by anion decomposition is promoted. Highly inorganic SEI film components formed mainly by anion decomposition may promote lithium metal deposition to transform from dendrites to masses, inhibit formation of dead lithium, reduce a specific surface area of lithium metal deposition, slow down occurrence of corrosion reaction, and in turn improve the cycle life and the safety of the lithium metal secondary battery. The chain carbonate or the cyclic carbonate mainly plays a role of reducing the viscosity of the electrolyte and improving the wettability and the ion conductivity, which in turn enhances the migration ability of lithium ions not bonded to the orthocarbonate, and optimizes the formation efficiency of the formed SEI film. A fluorinated cyclic carbonate or a fluorinated chain carbonate may decompose on a surface of a lithium metal negative electrode to form lithium fluoride and other inorganic components which contribute to a lithium metal deposition morphology and then quickly form a passivation layer, thereby further improving the safety and the cycle performance of the lithium metal battery.

In the present disclosure, the content of the orthocarbonate is in a range from 10% to 80%, and the orthocarbonate can be regarded as one of the major solvents rather than an additive for the non-aqueous electrolyte. Therefore, a concentration of the non-aqueous electrolyte can be moderate, the solvation energy is further reduced, and the transport effect of the lithium ions and high cycle efficiency of the secondary battery are ensured. Moreover, the non-aqueous electrolyte using the orthocarbonate as one of the major solvents may react with the lithium metal at 80°C and produce a protective layer capable of effectively passivating the surface of the lithium metal. Therefore, the whole battery forms an open circuit, and the further occurrence of side reactions is hindered, improving the thermal safety of the lithium metal secondary battery.

When the orthocarbonate is used as one of the major solvents of the non-aqueous electrolyte, due to a higher viscosity of the orthocarbonate compared with the other two carbonates, in order to avoid affecting the transport effect of the lithium ions due to an excessively high concentration of the non-aqueous electrolyte caused by an excessively high usage amount of the orthocarbonate, in some implementations in the first aspect, the mass content of the orthocarbonate in the non-aqueous electrolyte is 15% to 50%, and optionally 20% to 30%. By controlling the mass of the orthocarbonate within the above range, the orthocarbonate used improves a solvation environment of the lithium ions, lowers the solvation energy, increases a ratio of the anions participating in solvation, and effectively contributes to an SEI film mainly composed of SEI film components dominated by anion decomposition; and the problem of excessively high viscosity of the electrolyte due to the use of the orthocarbonate is further solved, ensuring efficient transport of the lithium ions and high cycle efficiency of the secondary battery.

As previously mentioned, the use of the orthocarbonate changes the formation of the SEI film. In order to make full use of the orthocarbonate to adjust a bonding form of the lithium ions in the lithium salt, in some implementations of the first aspect, a mass ratio of the orthocarbonate to the lithium salt is 1:3 to 3:1, and optionally, 1:1.5 to 1.5:1. Therefore, the orthocarbonate is further fully used to form an SEI film dominated by anion decomposition as much as possible.

In some implementations of the first aspect, the mass content of the chain carbonate is 1% to 80%, optionally 4% to 40%, and further optionally 20% to 30%. The chain carbonate in the above usage amount range is used for reducing the viscosity caused by addition of the orthocarbonate, to further improve the transport effect of lithium ions.

In some implementations of the first aspect, the mass content of the cyclic carbonate is 1% to 80%, optionally 4% to 40%, and further optionally 20% to 30%. The cyclic carbonate in the above usage amount range is used for reducing the viscosity caused by addition of the orthocarbonate, to further improve the transport effect of the lithium ions.

In some implementations of the first aspect, one of the chain carbonate and the cyclic carbonate is fluoride, which can solve the problem that simultaneous use of two fluorinated carbonates causes difficulty in electrolyte wetting and affects long-term stable cycling of the secondary battery. Optionally, the above cyclic carbonate is fluorinated cyclic carbonate, and the fluorinated cyclic carbonate decomposes at a negative electrode interface to produce lithium fluoride which facilitates lithium metal cycling.

In some implementations of the first aspect, a mass content of the lithium salt is 10% to 70%, optionally 15% to 40%, and further optionally 20% to 30%. The SEI film components with a more suitable thickness and better structure and performance can be formed on the surface of lithium metal using the lithium salt with the above content, to further improve the cycle performance.

The orthocarbonate used in the present disclosure may be selected from common orthocarbonate substances. In some implementations of the first aspect, the orthocarbonate is any one or more selected from the group consisting of compounds having a structure represented by formula I, compounds having a structure represented by formula II, or compounds having a structure represented by formula III, 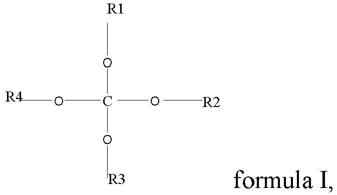 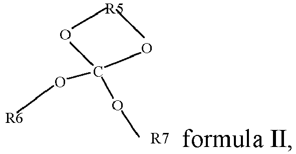 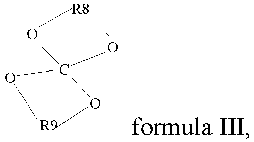 wherein R1 to R4, R6, and R7 each independently represent any one of C1-C10 alkyl or C1-C10 halogenated alkyl; and R5, R8, and R9 each independently represent any one of C1-C10 alkylidene or C1-C10 halogenated alkylidene.

Optionally, the orthocarbonate is any one or more selected from the compounds having the structure represented by formula I, wherein R1 to R4 each independently represent any one of C1-C10 alkyl or C1-C10 halogenated alkyl. Further optionally, the orthocarbonate is any one or more selected from the group consisting of tetramethyl orthocarbonate, tetraethyl orthocarbonate, tetrapropyl orthocarbonate, tetrabutyl orthocarbonate, tetrapentyl orthocarbonate, tetrahexyl orthocarbonate, tetraheptyl orthocarbonate, tetraoctyl orthocarbonate, tetranonyl orthocarbonate, tetradecyl orthocarbonate, fluorinated tetramethyl orthocarbonate, fluorinated tetraethyl orthocarbonate, fluorinated tetrapropyl orthocarbonate, fluorinated tetrabutyl orthocarbonate, fluorinated tetrapentyl orthocarbonate, fluorinated tetrahexyl orthocarbonate, fluorinated tetraheptyl orthocarbonate, fluorinated tetraoctyl orthocarbonate, fluorinated tetranonyl orthocarbonate, and fluorinated tetradecyl orthocarbonate. The orthocarbonate may be selected from the specific substances listed above. The smaller the molecular weight of the orthocarbonate is, the smaller the viscosity thereof is, and the better the ability in dissolving the lithium salt is.

The chain carbonate is a commonly used solvent in the non-aqueous electrolyte, and may be selected from conventional chain carbonates by those skilled in the art. In some implementations of the first aspect, the chain carbonate is any one or more selected from compounds having a structure represented by formula IV, 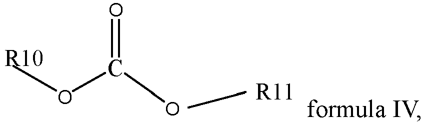 wherein R10 and R11 each independently represent any one of a halogen group, C1-C5 alkyl, or C1-C5 halogenated alkyl. Said "halogenated" may be fluorinated, chlorinated, or brominated, and optional fluorinated. Optionally, the chain carbonate is any one or more selected from the group consisting of dimethyl carbonate, diethyl carbonate, dipropyl carbonate, dibutyl carbonate, diamyl carbonate, ethyl methyl carbonate, methyl propyl carbonate, methyl butyl carbonate, methyl pentyl carbonate, ethyl propyl carbonate, ethyl butyl carbonate, ethyl pentyl carbonate, propyl butyl carbonate, propyl pentyl carbonate, butyl pentyl carbonate, fluorinated dimethyl carbonate, fluorinated diethyl carbonate, fluorinated dipropyl carbonate, fluorinated dibutyl carbonate, fluorinated diamyl carbonate, fluorinated ethyl methyl carbonate, fluorinated methyl propyl carbonate, fluorinated methyl butyl carbonate, fluorinated methyl pentyl carbonate, fluorinated ethyl propyl carbonate, fluorinated ethyl butyl carbonate, fluorinated ethyl pentyl carbonate, fluorinated propyl butyl carbonate, fluorinated propyl pentyl carbonate, and fluorinated butyl pentyl carbonate. The viscosities of the above chain carbonates are smaller than those of cyclic carbonates. Especially, the chain carbonates with small molecular weights can more effectively reduce the viscosity of the electrolyte, and improve the wettability and the ion conductivity of the electrolyte.

The cyclic carbonate is a commonly used solvent in the non-aqueous electrolyte, and may be selected from conventional chain carbonates by those skilled in the art. In some implementations of the first aspect, the cyclic carbonate is any one or more selected from compounds having the structure represented by formula V, 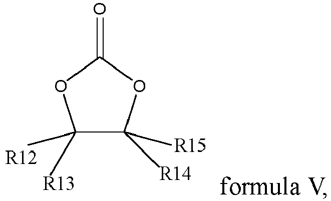 wherein R12 to R15 each independently represent any one of a halogen group, C1-C3 alkyl, or C1-C3 halogenated alkyl. Said "halogenated" may be fluorinated, chlorinated, or brominated, and optional fluorinated . Optionally, the cyclic carbonate is any one or more selected from the group consisting of ethylene carbonate, fluorinated ethylene carbonate, difluoroethylene carbonate, propylene carbonate, fluorinated propylene carbonate, difluoropropylene carbonate, and trifluoropropylene carbonate. Among them, the fluorinated cyclic carbonates are more prone to decompose at the negative electrode interface to produce lithium fluoride and other relevant inorganic components which facilitate the cycling of the lithium metal, better improving the cycle ability of the battery.

The lithium salt of the present disclosure may be selected from commonly used lithium salts in the electrolyte. In some implementations of the first aspect, the lithium salt is any one or more selected from the group consisting of lithium bis(fluorosulfonyl)imide (LiFSI), lithium bis(trifluoromethanesulphonyl)imide (LiTFSI), lithium bis(pentafluoroethanesulfonyl)mide (LiBETI), lithium hexafluorophosphate (LiPF₆), lithium perchlorate (LiClO₄), lithium tetrafluoroborate (LiBF₄), lithium hexafluoroarsenate (LiAsF₆), lithium trifluoromethanesulfonate (LiCF₃SO₃), lithium bis(oxalate)borate (LiBOB), and lithium difluoro(oxalato) borate (LiDFOB). The above lithium salts each have its own advantages. Among them, lithium fluorinated sulfonimides have a higher thermal decomposition temperature and are less sensitive to water, which may further improve the safety performance of the battery to a certain extent. Especially, the lithium bis(fluorosulfonyl)imide may form better SEI film component on the surface of the lithium metal.

In order to fully exert the cooperation effect of the orthocarbonate, the chain carbonate, and the cyclic carbonate, in some implementations of the first aspect, the orthocarbonate is tetramethyl orthocarbonate or tetraethyl orthocarbonate, the chain carbonate is any one of dimethyl carbonate, diethyl carbonate, fluorinated dimethyl carbonate, or fluorinated diethyl carbonate, the cyclic carbonate is any one selected from fluorinated ethylene carbonate, fluorinated propylene carbonate, or difluoropropylene carbonate, and the lithium salt is lithium bis(fluorosulfonyl)imide or lithium bis(trifluoromethanesulphonyl)imide. Further optionally, the orthocarbonate is tetramethyl orthocarbonate, the chain carbonate is dimethyl carbonate, the cyclic carbonate is fluorinated ethylene carbonate, and the lithium salt is selected from lithium bis(fluorosulfonyl)imide or lithium bis(trifluoromethanesulphonyl)imide. With the above combination of the substances, the substances may further cooperate with each other on the basis of fully exerting their respective effects, thereby improving the cycle performance and the safety of the lithium metal secondary battery.

### Secondary battery

The secondary battery, also called a rechargeable battery or a storage battery, refers to a battery which continues to be used by activating an active material by charging the battery after the battery is discharged.

In general, the secondary battery includes a positive electrode plate, a negative electrode plate, a separator, and an electrolyte. During charge and discharge of the battery, active ions (for example, lithium ions) are intercalated and deintercalated between the positive electrode plate and the negative electrode plate back and forth. The separator is arranged between the positive electrode plate and the negative electrode plate, and mainly plays a role of preventing a short circuit between positive and negative electrodes, and allowing the active ions to pass through. The electrolyte is arranged between the positive electrode plate and the negative electrode plate, and mainly plays a role of conducting active ions.

A second aspect of the present disclosure provides a secondary battery, including a positive electrode plate, a negative electrode plate, an electrolyte, and a separator. The electrolyte is any non-aqueous electrolyte mentioned above; and the negative electrode plate includes lithium metal. The non-aqueous electrolyte of the present disclosure is less corrosive to the negative electrode plate, which improves the safety and the cycle performance of the secondary battery.

### Negative electrode plate

The negative electrode plate includes a negative electrode current collector and a negative electrode active layer arranged on at least one surface of the negative electrode current collector.

As an example, the negative electrode current collector has two surfaces opposite to each other in its own thickness direction, and the negative electrode active layer is arranged on either or both of the two opposite surfaces of the negative electrode current collector.

In any implementation of the second aspect, the negative electrode plate includes a current collector and a negative electrode active layer. The negative electrode active layer is lithium metal or lithium alloy. Optionally, the lithium alloy includes any one of tin, zinc, aluminum, magnesium, silver, gold, gallium, indium, foil, boron, carbon, or silicon, and lithium metal.

### Positive electrode plate

The positive electrode plate generally includes a positive electrode current collector and a positive electrode film layer arranged on at least one surface of the positive electrode current collector. The positive electrode film layer includes a positive electrode active material.

As an example, the positive electrode current collector has two surfaces opposite to each other in its own thickness direction, and the positive electrode film layer is arranged on either or both of the two opposite surfaces of the positive electrode current collector.

In some implementations, the positive electrode current collector may adopt a metal foil or a composite current collector. For example, a copper foil may be used as the metal foil. The composite current collector may include a polymer material base layer and a metal layer formed on at least one surface of the polymer material base layer. The composite current collector may be formed by forming a metal material (such as aluminum, aluminum alloy, nickel, nickel alloy, titanium, titanium alloy, liver and liver alloy) on a polymer material substrate (such as polypropylene (PP), polyethylene terephthalate (PET), polybutylene terephthalate (PBT), polystyrene (PS), and polyethylene (PE)).

In some implementations, the positive electrode active material may adopt a positive electrode active material that is well known in the art for use in the battery. As an example, the positive electrode active material may include at least one of following materials: Li-containing phosphates with an olivine-type structure, lithium transition metal oxides, modified compounds thereof, elemental sulfur, and gas electrodes including oxygen, carbon dioxide, and nitrogen gas, etc. However, the present disclosure is not limited to these materials, and may further use other traditional materials which may serve as the positive electrode active material for the battery. These positive electrode active materials may be used alone or in combination of two or more types. Among them, examples of the lithium transition metal oxides include, but are not limited to, at least one of lithium cobalt oxides (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxides (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), and LiNi_{0.8}Co_{0.1}Mn_{0.1}O₂ (also referred to as NCM811)), lithium nickel cobalt aluminum oxides (such as LiNi_{0.85}Co_{0.15}Al_{0.05}O₂), modified compounds thereof, or the like . Examples of the lithium-containing phosphates of the olivine structure may include, but are not limited to, at least one of lithium iron phosphate (such as LiFePO₄ (also referred to as LFP)), composites of lithium iron phosphate and carbon, lithium manganese phosphate (such as LiMnPO₄), composites of lithium manganese phosphate and carbon, lithium manganese iron phosphate, or composites of lithium manganese iron phosphate and carbon.

In some implementations, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some implementations, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some implementations, the positive electrode plate may be prepared in the following manner: the above components for preparing the positive electrode plate, for example, the positive electrode active material, the conductive agent, the binder, and any other components, are dispersed into a solvent (for example, N-methyl-2-pyrrolidone ), to form a positive electrode slurry; and the positive electrode slurry is applied onto the positive electrode current collector for drying, cold pressing and other procedures to obtain the positive electrode plate.

### Separator

In some implementations, the secondary battery further includes a separator. There is no special limitation on a type of the separator in the present disclosure, and any known porous separator with good chemical stability and mechanical stability may be selected.

In some implementations, the separator may be made of at least one of glass fibers, non-woven fabrics, polyethylene, polypropylene, or polyvinylidene fluoride. The separator may be a single-layer film or a multi-layer composite film, which is not specifically limited. If the separator is the multi-layer composite film, materials of the layers may be same or different, which is not specifically limited.

In some implementations, the positive electrode plate, the negative electrode plate, and the separator may be prepared into an electrode assembly by a winding process or a lamination process.

In some implementations, the secondary battery may include an outer package. The outer package may be used for packaging the electrode assembly and the electrolyte.

In some implementations, the outer package of the secondary battery may be a hard shell, for example, a hard plastic shell, an aluminum shell, a steel shell, and the like. The outer package of the secondary battery may be a soft package, for example, a bag. The soft package may be made of plastics, for example, polypropylene, polybutylene terephthalate, poly(butylene succinate), etc.

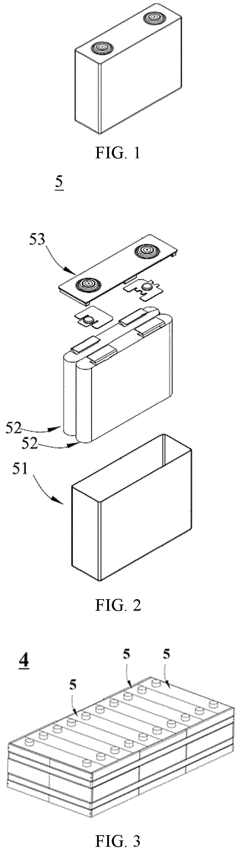

The shape of the secondary battery is not particularly limited in the present disclosure, and the secondary battery may be in a cylindrical shape, a square shape, or any other shapes. For example, FIG. 1 shows an exemplary secondary battery 5 of a square structure.

In some implementations, referring to FIG. 2, the outer package may include a housing 51 and a cover plate 53. The housing 51 may include a bottom plate and side plates connected to the bottom plate; and the bottom plate and the side plates define an accommodating chamber. The housing 51 has an opening in communication with the accommodating chamber; and the cover plate 53 can cover the opening, to close the accommodating chamber. An electrode assembly 52 may be formed from the positive electrode plate, the negative electrode plate, and the separator by a winding process or a lamination process. The electrode assembly 52 is packaged in the accommodating chamber. The electrolyte infiltrates into the electrode assembly 52. The number of electrode assemblies 52 included in the secondary battery 5 may be one or more, and may be selected by those skilled in the art according to the specific actual needs.

In some implementations, the secondary battery may be assembled into a battery module; and the number of secondary batteries included in the battery module may be one or more, and may be selected by those skilled in the art according to the application and the capacity of the battery module.

FIG. 3 shows an exemplary battery module 4. Referring to FIG. 3, in the battery module 4, a plurality of secondary batteries 5 may be sequentially arranged in a length direction of the battery module 4. Certainly, the plurality of secondary batteries 5 may alternatively be arranged in any other modes. Further, the plurality of secondary batteries 5 may be fixed by fasteners.

Optionally, the battery module 4 may further include a housing with an accommodating space; and the plurality of secondary batteries 5 is accommodated in the accommodating space.

In some implementations, the above battery module may further be assembled into a battery pack; and the number of battery modules included in the battery pack may be one or more, and may be selected by those skilled in the art according to the application and the capacity of the battery pack.

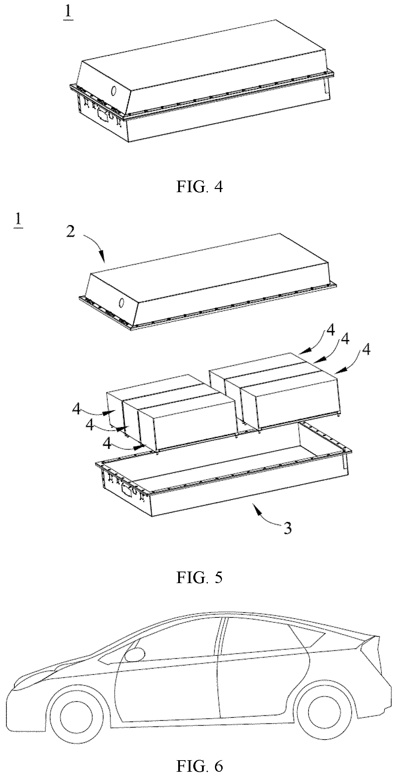

FIG. 4 and FIG. 5 show an exemplary battery pack 1. Referring to FIG. 4 and FIG. 5, the battery pack 1 may include a battery box and a plurality of battery modules 4 arranged in the battery box. The battery box includes an upper box body 2 and a lower box body 3; and the upper box body 2 can cover the lower box body 3, to form a closed space for accommodating the battery modules 4. The plurality of battery modules 4 may be arranged in the battery box in any mode.

Furthermore, the present disclosure further provides an electrical device, including at least one of the secondary battery, the battery module, or the battery pack provided by the present disclosure. The secondary battery, the battery module, or the battery pack may serve as a power supply for the electrical device, or an energy storage unit for the electrical device. The electrical device may include a mobile device (for example, a mobile phone, a notebook computer and the like), an electric vehicle (for example, an all-electric vehicle, a hybrid electric vehicle, a plug-in hybrid electric vehicle, an electric bicycle, an electric scooter, an electric golf cart, an electric truck, etc.), an electric train, ships and satellites, or an energy storage system, etc., but is not limited thereto.

The secondary battery, the battery module, or the battery pack may be selected for the electrical device according to the usage needs.

FIG. 6 shows an exemplary electrical device. The electrical device is the all-electric vehicle, the hybrid electric vehicle, the plug-in hybrid electric vehicle, or the like. In order to meet the demands of the electrical device on a high power and a high energy density of the secondary battery, the battery pack or battery module may be used.

### Embodiments

The embodiments of the present disclosure are described below. The embodiments described below are illustrative and only used to explain the present disclosure, but should not be construed as limiting the present disclosure. The embodiments follow technologies or conditions described in the literatures in the art or instructions of products where the specific technologies and conditions are not specified. All agents or instruments without indicating manufacturers are conventional products that may be purchased commercially.

### Embodiment 1

### Preparation of electrolyte for liquid lithium metal secondary battery based on orthocarbonate

1.23 g of tetraethyl orthocarbonate, 1.25 g of lithium salt LiFSI, 1.24 g of dimethyl carbonate (DMC), and 1.24 g of fluorinated ethylene carbonate (FEC) were weighed, mixed at room temperature, and fully stirred until a transparent and clear solution was formed, i.e., an electrolyte that can be used for cycling of the lithium metal secondary battery was obtained.

### Electrochemical performance test

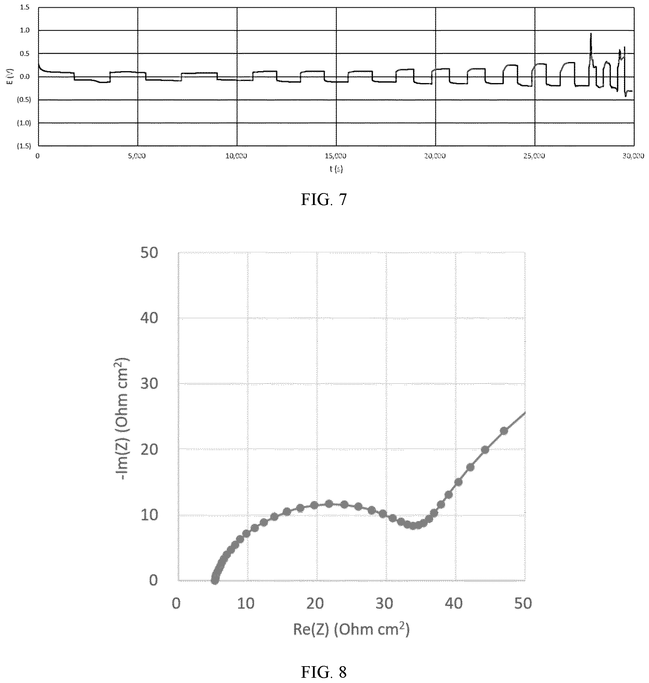

A button battery was assembled with copper-coated lithium metal foils each having a thickness of 50 µm as a negative electrode and a positive electrode, and a porous polyethylene film as a separator. The above prepared electrolyte was injected to completely wet the surfaces of the separator and the electrodes. A charge-discharge cycle test was performed on the assembled symmetric battery at different current densities from low to high using a Solartron electrochemical workstation, and the obtained results were as shown in FIG. 7. In the drawing, the symmetric battery was cycled at current densities of 4 mA/cm², 6 mA/cm², 8 mA/cm², 10 mA/cm², and 20 mA/cm² and a surface capacity density of 2 mAh/cm², three times for each current density. It can be seen that the electrolyte may maintain a stable cycle at a high current density of 10 mA/cm². At an ultra-high current density of 20 mA/cm², an overpotential is unstable, but the electrolyte can still maintain the cycle, indicating that the cooperation of the orthocarbonate, the chain carbonate, and the cyclic carbonate exerts the synergistic effect of achieving the ion conductivity and the stable deposition and stripping of lithium metal at the same time.

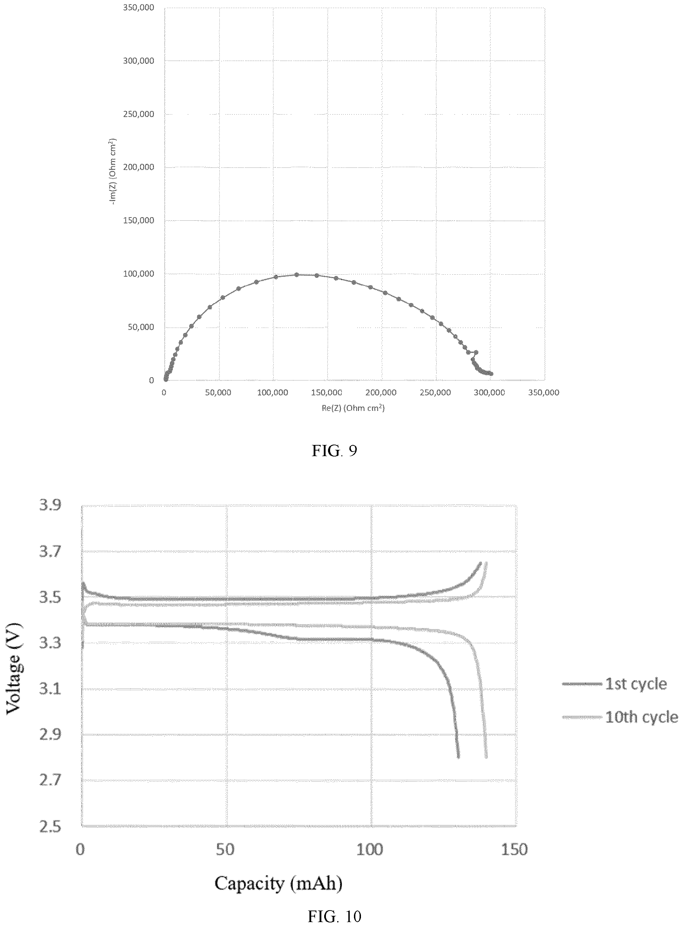

For the Li-Li button battery with the above composition, an impedance test was performed at room temperature using the Solartron electrochemical workstation. By setting a test frequency range from 1 MHz to 1 Hz, and an alternating voltage amplitude at 5 mV, an electrochemical impedance curve of the button battery was obtained; and the impedance test was performed at room temperature. Results are shown in FIG. 8. It can be seen that the battery has a very small bulk and interface impedance, further confirming that the electrolyte can perform a high current cycle. After the button battery alone was placed at 80°C for 3 h, the impedance was retested and is as shown in FIG. 9. It can be found that in this case, an interface resistance is significantly increased, and the battery is completely an open circuit. The battery was disassembled for a gas production test; and it was found that no significant gas component was produced, while the surface of lithium metal was gray black, indicating that the surface was rapidly passivated by a reaction between the electrolyte and the lithium metal at this temperature, to prevent an overcurrent of the battery, inhibit the further occurrence of side reactions, and improve the thermal safety of the battery.

### Preparation and test of liquid lithium metal secondary battery

Preparation of positive electrode: lithium iron phosphate (LiFePO₄) as a positive electrode active material, acetylene black as a conductive agent, and PVDF as a binder were mixed according to a mass ratio of 98: 1: 1; a solvent NMP was added, and stirring was performed until the system was homogeneous, to obtain a positive electrode slurry; the positive electrode slurry was applied uniformly onto both surfaces of a positive electrode current collector aluminum foil, followed by airing at the room temperature, transporting into an oven for further drying, and cutting into 40 mm*50 mm rectangular positive electrode plates, with a surface capacity of 3.5 mAh/cm².

Separator: the porous polyethylene film was selected.

Preparation of negative electrode: a lithium foil having a thickness of 50 µm was overlaid on a copper foil having a thickness of 12 µm by rolling, followed by cutting into 41 mm*51 mm rectangular negative electrode plates for later use.

Assembly of a battery: one cut positive electrode was matched with two cut negative electrodes, with the separator arranged therebetween for isolating the positive electrode from the negative electrodes; a resultant was wrapped into an aluminum plastic film bag to form a laminated dry cell; 0.3 g of the prepared electrolyte was injected into the aluminum plastic film bag, followed by vacuum hot pressing packaging, and standing still for at least 12 h; then the laminated cell was subjected to an impedance test at room temperature; and an intercept of a resistance real part of a right side of a semicircle in electrochemical impedance spectroscopy was intercepted, and the numerical value of the intercept reflected an internal resistance of the battery. After the impedance test ended, a cycle test started. A rated capacity of the laminated battery prepared with this method is 140 mAh.

Battery cell cycling: an ambient temperature for cycling of a battery cell was set at 25°C; a charge-discharge cycling was performed at a rate of 0.5 C (i.e., 70 mA); and cut-off voltages for charging and discharging were set at 3.65 V and 2.80 V respectively.

A cycling voltammogram of the above battery is shown in FIG. 10. It can be seen that the cycling curve of the battery tends to be stable in charge-discharge capacity after 10 cycles, and the battery could release a rated capacity and had a cyclic coulombic efficiency of 100%. When a cycle retention rate was reduced to 80%, the number of cycles was recorded.

### Gas production test of liquid lithium metal secondary battery

The prepared laminated battery cell was connected to a differential electrochemical mass spectrometer (DEMS); and this test method can detect gas production in situ during cycling of the battery cell. Every time the laminated battery cell was cycled for one cycle at the rate of 0.5 C, a gas production amount of the battery cell in this cycle was recorded for comparison.

### Safety test of liquid lithium metal secondary battery in hot box

Preparation of positive electrode: lithium nickel manganese cobalt oxide (NMC) as a positive electrode active material, acetylene black as a conductive agent, and PVDF as a binder were mixed according to a mass ratio of 98: 1: 1, a solvent NMP was added, and stirring was performed until the system was homogeneous, to obtain a positive electrode slurry; the positive electrode slurry was applied uniformly to both surfaces of a positive electrode current collector aluminum foil, followed by airing at the room temperature, transporting into an oven for further drying, and cutting into 40 mm*50 mm rectangular positive electrode plates, with a surface capacity of 3.5 mAh/cm².

Separator: the porous polyethylene film was selected.

Preparation of negative electrode: a lithium foil having a thickness of 50 µm was overlaid on a copper foil having thickness of 12 µm by rolling, followed by cutting into 41 mm*51 mm rectangular negative electrode plates for later use.

10 cut positive electrodes were matched with 20 cut negative electrodes, with the separator arranged therebetween for isolating the positive electrodes from the negative electrodes; a resultant was wrapped into an aluminum plastic film bag to form a soft package dry battery cell; and 3 g of the prepared electrolyte was injected, and the aluminum plastic film bag was subjected to vacuum packaging. The soft package battery obtained in this method had a rated capacity of 1.4 Ah. The battery was let stand still for at least 12 h, and then the battery cell was fully charged (4.3 V) at the rate of 0.5 C. The fully charged soft package battery was placed in a hot box for heat preservation for 30 min every 5 °C from the temperature of 30 °C, until a temperature at which thermal runaway of the battery cell occurred. This temperature was a thermal runaway temperature of the battery cell.

Preparation and test methods in Embodiment 2 to 34 and Comparative examples 1 to 8 are similar to those in Embodiment 1. See Table 1 for detail.

**Table 1**

| No. | Orthocarbonate | | Lithium salt | | Chain carbonate | | Cyclic carbonate | | Cycle number | Internal resistance of battery (Ω) | Gas production of battery (mL) |
|---|---|---|---|---|---|---|---|---|---|---|---|
| | Substance | Mass (g) | Substance | Mass (g) | Substance | Mass (g) | Substance | Mass (g) | | | |
| Embodiment 1 | Tetraethyl orthocarbonate | 1.23 | LiFSI | 1.25 | Dimethyl carbonate | 1.24 | Fluorinated ethylene carbonate | 1.24 | 153 | 5.1 | 0.1275 |
| Embodiment 2 | Tetraethyl orthocarbonate | 1.23 | LiFSI | 1.25 | Methyl trifluoroethyl carbonate | 1.24 | Ethylene carbonate | 1.24 | 148 | 5.4 | 0.1305 |
| Embodiment 3 | Tetraethyl orthocarbonate | 1.23 | LiFSI | 1.25 | Dimethyl carbonate | 0.62 | Fluorinated ethylene carbonate | 0.62 | 128 | 6.8 | 0.1233 |
| Embodiment 4 | Tetraethyl orthocarbonate | 1.23 | LiFSI | 1.25 | Methyl trifluoroethyl carbonate | 0.62 | Ethylene carbonate | 0.62 | 123 | 7.1 | 0.1296 |
| Embodiment 5 | Tetramethyl orthocarbonate | 1.23 | LiFSI | 1.25 | Dimethyl carbonate | 1.24 | Fluorinated ethylene carbonate | 1.24 | 136 | 4.6 | 0.1306 |
| Embodiment 6 | Tetrapropyl orthocarbonate | 1.23 | LiFSI | 1.25 | Dimethyl carbonate | 1.24 | Fluorinated ethylene carbonate | 1.24 | 131 | 7.6 | 0.1177 |
| Embodiment 7 | Tetraethyl orthocarbonate | 1.23 | LiPF₆ | 1.25 | Dimethyl carbonate | 1.24 | Fluorinated ethylene carbonate | 1.24 | 141 | 5.8 | 0.1396 |
| Embodiment 8 | Tetraethyl orthocarbonate | 0.41 | LiFSI | 1.25 | Dimethyl carbonate | 1.24 | Fluorinated ethylene carbonate | 1.24 | 102 | 5.0 | 0.1408 |
| Embodiment 9 | Tetraethyl orthocarbonate | 14.92 | LiFSI | 1.25 | Dimethyl carbonate | 1.24 | Fluorinated ethylene carbonate | 1.24 | 82 | 10.4 | 0.0967 |
| Embodiment 10 | Tetraethyl orthocarbonate | 0.93 | LiFSI | 1.25 | Dimethyl carbonate | 1.24 | Fluorinated ethylene carbonate | 1.24 | 148 | 4.9 | 0.1228 |
| Embodiment 11 | Tetraethyl orthocarbonate | 1.60 | LiFSI | 1.25 | Dimethyl carbonate | 1.24 | Fluorinated ethylene carbonate | 1.24 | 150 | 5.3 | 0.1201 |
| Embodiment 12 | Tetraethyl orthocarbonate | 1.23 | LiFSI | 0.41 | Dimethyl carbonate | 1.24 | Fluorinated ethylene carbonate | 1.24 | 104 | 9.8 | 0.1530 |
| Embodiment 13 | Tetraethyl orthocarbonate | 1.23 | LiFSI | 8.66 | Dimethyl carbonate | 1.24 | Fluorinated ethylene carbonate | 1.24 | 90 | 8.6 | 0.0872 |
| Embodiment 14 | Tetraethyl orthocarbonate | 1.23 | LiFSI | 0.93 | Dimethyl carbonate | 1.24 | Fluorinated ethylene carbonate | 1.24 | 144 | 5.8 | 0.1373 |
| Embodiment 15 | Tetraethyl orthocarbonate | 1.23 | LiFSI | 1.59 | Dimethyl carbonate | 1.24 | Fluorinated ethylene carbonate | 1.24 | 147 | 5.2 | 0.1259 |
| Embodiment 16 | Tetraethyl orthocarbonate | 1.23 | LiFSI | 1.25 | Dimethyl carbonate | 0.04 | Fluorinated ethylene carbonate | 1.24 | 101 | 14.7 | 0.1593 |
| Embodiment 17 | Tetraethyl orthocarbonate | 1.23 | LiFSI | 0.41 | Dimethyl carbonate | 8.2 | Fluorinated ethylene carbonate | 0.41 | 87 | 9.5 | 0.1021 |
| Embodiment 18 | Tetraethyl orthocarbonate | 1.23 | LiFSI | 1.25 | Dimethyl carbonate | 0.93 | Fluorinated ethylene carbonate | 1.24 | 141 | 5.2 | 0.1295 |
| Embodiment 19 | Tetraethyl orthocarbonate | 1.23 | LiFSI | 1.25 | Dimethyl carbonate | 1.59 | Fluorinated ethylene carbonate | 1.24 | 148 | 4.8 | 0.1194 |
| Embodiment 20 | Tetraethyl orthocarbonate | 1.23 | LiFSI | 1.25 | Dimethyl carbonate | 1.24 | Fluorinated ethylene carbonate | 0.04 | 81 | 4.4 | 0.0926 |
| Embodiment 21 | Tetraethyl orthocarbonate | 1.23 | LiFSI | 0.41 | Dimethyl carbonate | 0.41 | Fluorinated ethylene carbonate | 8.2 | 85 | 7.1 | 0.1582 |
| Embodiment 22 | Tetraethyl orthocarbonate | 1.23 | LiFSI | 1.25 | Dimethyl carbonate | 1.24 | Fluorinated ethylene carbonate | 0.93 | 145 | 5.0 | 0.1202 |
| Embodiment 23 | Tetraethyl orthocarbonate | 1.23 | LiFSI | 1.25 | Dimethyl carbonate | 1.24 | Fluorinated ethylene carbonate | 1.59 | 142 | 5.5 | 0.1281 |
| Embodiment 24 | Tetraethyl orthocarbonate | 0.66 | LiFSI | 1.25 | Dimethyl carbonate | 1.24 | Fluorinated ethylene carbonate | 1.24 | 136 | 4.9 | 0.1289 |
| Embodiment 25 | Tetraethyl orthocarbonate | 1.87 | LiFSI | 1.25 | Dimethyl carbonate | 1.24 | Fluorinated ethylene carbonate | 1.24 | 144 | 5.6 | 0.1146 |
| Embodiment 26 | Tetraethyl orthocarbonate | 1.65 | LiFSI | 3.3 | Dimethyl carbonate | 1.24 | Fluorinated ethylene carbonate | 1.24 | 120 | 5.5 | 0.1121 |
| Embodiment 27 | Tetraethyl orthocarbonate | 1.03 | LiFSI | 0.62 | Dimethyl carbonate | 1.24 | Fluorinated ethylene carbonate | 1.24 | 133 | 5.4 | 0.1356 |
| Embodiment 28 | Fluorinated tetramethyl orthocarbonate | 1.23 | LiFSI | 1.25 | Dimethyl carbonate | 1.24 | Fluorinated ethylene carbonate | 1.24 | 107 | 8.9 | 0.0489 |
| Embodiment 29 | 2,2-dimethoxy-1,3-dioxolane | 1.23 | LiFSI | 1.25 | Dimethyl carbonate | 1.24 | Fluorinated ethylene carbonate | 1.24 | 138 | 7.2 | 0.1250 |
| Embodiment 30 | Tetraethyl orthocarbonate | 1.23 | LiTFSI | 1.25 | Dimethyl carbonate | 1.24 | Fluorinated ethylene carbonate | 1.24 | 137 | 5.1 | 0.1293 |
| Embodiment 31 | Tetraethyl orthocarbonate | 1.23 | LiDFOB | 1.25 | Dimethyl carbonate | 1.24 | Fluorinated ethylene carbonate | 1.24 | 115 | 7.8 | 0.2165 |
| Embodiment 32 | Tetrabutyl orthocarbonate | 1.23 | LiFSI | 1.25 | Dimethyl carbonate | 1.24 | Fluorinated ethylene carbonate | 1.24 | 119 | 8.4 | 0.1066 |
| Embodiment 33 | Tetraethyl orthocarbonate | 1.23 | LiFSI | 0.75 | Dimethyl carbonate | 1.24 | Fluorinated ethylene carbonate | 1.24 | 131 | 5.9 | 0.1285 |
| Embodiment 34 | Tetraethyl orthocarbonate | 1.23 | LiFSI | 1.25 | Methyl trifluoroethyl carbonate | 1.24 | Fluorinated ethylene carbonate | 1.24 | 118 | 9.9 | 0.1682 |
| Embodiment 35 | Tetraethyl orthocarbonate | 3.73 | LiFSI | 1.25 | Dimethyl carbonate | 1.24 | Fluorinated ethylene carbonate | 1.24 | 118 | 6.8 | 0.1192 |
| Embodiment 36 | Tetraethyl orthocarbonate | 1.23 | LiFSI | 2.47 | Dimethyl carbonate | 1.24 | Fluorinated ethylene carbonate | 1.24 | 130 | 5.6 | 0.1226 |
| Embodiment 37 | Tetraethyl orthocarbonate | 1.23 | LiFSI | 1.25 | Dimethyl carbonate | 2.48 | Fluorinated ethylene carbonate | 1.24 | 129 | 4.4 | 0.1282 |
| Embodiment 38 | Tetraethyl orthocarbonate | 1.23 | LiFSI | 1.25 | Dimethyl carbonate | 1.24 | Fluorinated ethylene carbonate | 2.48 | 127 | 5.9 | 0.1295 |
| Comparative example 1 | Tetraethyl orthocarbonate | 20.89 | LiFSI | 1.25 | Dimethyl carbonate | 1.24 | Fluorinated ethylene carbonate | 1.24 | 65 | 12.2 | 0.0951 |
| Comparative example 2 | Tetraethyl orthocarbonate | 0.32 | LiFSI | 1.25 | Dimethyl carbonate | 1.24 | Fluorinated ethylene carbonate | 1.24 | 77 | 5.2 | 0.1499 |
| Comparative example 3 | Tetraethyl orthocarbonate | 1.23 | LiFSI | 1.25 | Dimethyl carbonate | 2.48 | - | - | 17 | 4.7 | 0.0972 |
| Comparative example 4 | Tetraethyl orthocarbonate | 1.23 | LiFSI | 1.25 | Ethyl methyl carbonate | 2.48 | - | - | 19 | 4.8 | 0.0926 |
| Comparative example 5 | Tetraethyl orthocarbonate | 1.23 | LiFSI | 1.25 | - | - | Fluorinated ethylene carbonate | 2.48 | 21 | 9.6 | 0.1603 |
| Comparative example 6 | - | - | LiFSI | 1.25 | Dimethyl carbonate | 1.24 | Fluorinated ethylene carbonate | 1.24 | 37 | 5.0 | 0.1233 |
| Comparative example 7 | Tetraethyl orthocarbonate | 1.23 | LiFSI | 1.25 | Methyl trifluoroethyl carbonate | 2.48 | - | - | 31 | 10.1 | 0.1582 |
| Comparative example 8 | Tetraethyl orthocarbonate | 1.23 | LiFSI | 1.25 | - | - | Ethylene carbonate | 2.48 | 19 | 5.2 | 0.0827 |
| Comparative example 9 | - | - | LiFSI | 1.25 | Methyl trifluoroethyl carbonate | 1.24 | Ethylene carbonate | 1.24 | 41 | 5.5 | 0.1293 |
| Comparative example 10 | Tetraethyl orthocarbonate | 1.23 | LiFSI | 1.25 | Dimethyl carbonate | 1.24 | Ethylene carbonate | 1.24 | 20 | 4.9 | 0.1028 |

It can be seen from comparison on data in Embodiment 1, Embodiments 5 and 6 and Embodiments 28 and 29 that, compared with the tetramethyl orthocarbonate, the tetrapropyl orthocarbonate, the fluorinated tetramethyl orthocarbonate, and the 2,2-dimethoxy-1,3-dioxolane, the tetraethyl orthocarbonate has the most significant effect of prolonging a cycle life of the lithium metal battery.

It can be seen from comparison on Embodiment 1, Embodiments 8 to 11, and Comparative example 6 that, when an addition amount of the orthocarbonate is 30% or less, the internal resistance of the battery was not significantly increased; and instead of a significant increase in the gas production in an initial cycle, the gas production was inhibited to a certain degree. However, when the addition amount of the orthocarbonate was too high, the cycle life of the lithium metal battery was affected. This is because the internal resistance of the battery is too high due to a too high content of the orthocarbonate, and a consumption rate of the lithium salt in the cycle is accelerated, resulting in shortening in the cycle life compared with the cycle life in the case of the content of the orthocarbonate of 80% or less.

It can be seen from comparison on Embodiment 1 and Embodiments 12 to 15, a too low or too high concentration of the lithium salt can shorten the cycle life. It is because the higher the concentration of the lithium salt is, the higher the degree of anions participating in solvation of lithium ions is, the more the formed SEI film due to anion decomposition is, thereby prolonging the cycle life. However, too high concentration of the lithium salt causes reduced effective SEI film, adversely affecting the prolonging of the cycle life.

It can be seen from comparison on Embodiment 1 and Comparative examples 3 to 9, lack of one of the orthocarbonate, the chain carbonate, and the cyclic carbonate may cause fatal effect on the cycle life of the battery. This is because the orthocarbonate promotes a solvation structure with weak solvation and high anion participating degree; the chain carbonate is in charge of lowering the viscosity of the electrolyte, and improving the wettability and the ion conductivity; and the fluorinated cyclic carbonate is in charge of decomposing to form the components which further facilitate the lithium metal cycling. The three of them synergistically acts, and are all needed.

It can be seen from comparison on Embodiment 1, Embodiment 34 and Comparative example 10 that, among the chain carbonate and the cyclic carbonate, one of them needs to be the fluorinated carbonate, and the other is non-fluorinated carbonate. This is because lithium fluoride and other fluorine-containing components produced from decomposition of the fluorinated carbonate can promote good cycling of the lithium metal; while if the two solvents are both fluorinated carbonates, the electrolyte may be difficult in wetting, which hinders long-term stable cycling of the battery.

The thermal runaway temperature in Embodiment 1 is 150°C, and the thermal runaway temperature in Comparative example 6 is 140°C. It can be seen from comparison on Embodiment 1 and Comparative example 6 that, after addition of the orthocarbonate, the hot box stability of the lithium metal secondary battery with a ternary material as the positive electrode material is improved. This is because orthocarbonate molecules react with the surface of the lithium metal to rapidly passivate the surface, inhibiting a further exothermic reaction.

Furthermore, in all the embodiments, the gas productions of the lithium metal batteries are all lower than 0.2 mL, which would not cause adverse impact on the cyclic life and the safety of the batteries within this gas production range.

While the present disclosure has been described with reference to the preferred embodiments, various improvements may be made and equivalents may be substituted for elements therein without departing from the scope of the present disclosure. Particularly, as long as there is no conflict, various technical features mentioned in various embodiments may be combined in any way. The present disclosure is not limited to the particular embodiments disclosed herein, but includes all the technical solutions falling within the scope of the claims.

## Claims

1. A non-aqueous electrolyte, comprising orthocarbonate, chain carbonate, cyclic carbonate, and a lithium salt, wherein a mass content of the orthocarbonate is 10% to 80%; and at least one of the chain carbonate or the cyclic carbonate is fluoride.

2. The non-aqueous electrolyte according to claim 1, wherein the mass content of the orthocarbonate in the non-aqueous electrolyte is 15% to 50% and optionally 20% to 30%.

3. The non-aqueous electrolyte according to claim 1 or 2, wherein a mass ratio of the orthocarbonate to the lithium salt is 1:3 to 3:1 and optionally 1: 1.5 to 1.5:1.

4. The non-aqueous electrolyte according to claims 1 to 3, wherein
a mass content of the chain carbonate is 1% to 80%, optionally 4% to 40%, and further optionally 20% to 30%; and/or
a mass content of the cyclic carbonate is 1% to 80%, optionally 4% to 40%, and further optionally 20% to 30%; and/or
a mass content of the lithium salt is 10% to 70%, optionally 15% to 40%, and further optionally 20% to 30%.

5. The non-aqueous electrolyte according to claims 1 to 4, wherein one of the chain carbonate and the cyclic carbonate is fluoride, and optionally, the cyclic carbonate is fluorinated cyclic carbonate.

6. The non-aqueous electrolyte according to any one of claims 1 to 5, wherein the orthocarbonate is any one or more selected from the group consisting of compounds having a structure represented by formula I, compounds having a structure represented by formula II, or compounds having a structure represented by formula III, 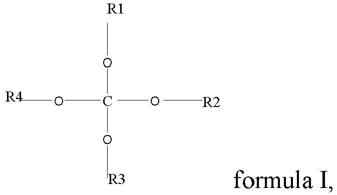 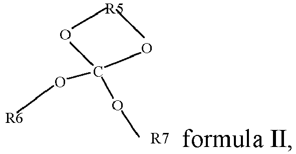 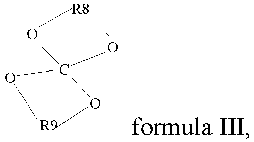
wherein R1 to R4, R6 and R7 each independently represent any one of C1-C10 alkyl or C1-C10 halogenated alkyl; and R5, R8, and R9 each independently represent any one of C1-C10 alkylidene or C1-C10 halogenated alkylidene;
optionally, the orthocarbonate is any one or more selected from the compounds having the structure represented by formula I, wherein R1 to R4 each independently represent any one of C1-C10 alkyl or C1-C10 halogenated alkyl;
further optionally, the orthocarbonate is any one or more selected from the group consisting of tetramethyl orthocarbonate, tetraethyl orthocarbonate, tetrapropyl orthocarbonate, tetrabutyl orthocarbonate, tetrapentyl orthocarbonate, tetrahexyl orthocarbonate, tetraheptyl orthocarbonate, tetraoctyl orthocarbonate, tetranonyl orthocarbonate, tetradecyl orthocarbonate, fluorinated tetramethyl orthocarbonate, fluorinated tetraethyl orthocarbonate, fluorinated tetrapropyl orthocarbonate, fluorinated tetrabutyl orthocarbonate, fluorinated tetrapentyl orthocarbonate, fluorinated tetrahexyl orthocarbonate, fluorinated tetraheptyl orthocarbonate, fluorinated tetraoctyl orthocarbonate, fluorinated tetranonyl orthocarbonate, and fluorinated tetradecyl orthocarbonate.

7. The non-aqueous electrolyte according to any one of claims 1 to 6, wherein the chain carbonate is any one or more selected from compounds having a structure represented by formula IV, 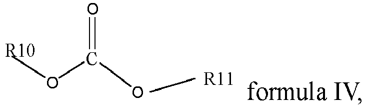
wherein R10 and R11 each independently represent any one of a halogen group, C1-C5 alkyl, or C1-C5 halogenated alkyl;
optionally, the chain carbonate is any one or more selected from the group consisting of dimethyl carbonate, diethyl carbonate, dipropyl carbonate, dibutyl carbonate, diamyl carbonate, ethyl methyl carbonate, methyl propyl carbonate, methyl butyl carbonate, methyl pentyl carbonate, ethyl propyl carbonate, ethyl butyl carbonate, ethyl pentyl carbonate, propyl butyl carbonate, propyl pentyl carbonate, butyl pentyl carbonate, fluorinated dimethyl carbonate, fluorinated diethyl carbonate, fluorinated dipropyl carbonate, fluorinated dibutyl carbonate, fluorinated diamyl carbonate, fluorinated ethyl methyl carbonate, fluorinated methyl propyl carbonate, fluorinated methyl butyl carbonate, fluorinated methyl pentyl carbonate, fluorinated ethyl propyl carbonate, fluorinated ethyl butyl carbonate, fluorinated ethyl pentyl carbonate, fluorinated propyl butyl carbonate, fluorinated propyl pentyl carbonate, and fluorinated butyl pentyl carbonate.

8. The non-aqueous electrolyte according to any one of claims 1 to 7, wherein the cyclic carbonate is any one or more selected from compounds having a structure represented by formula V, 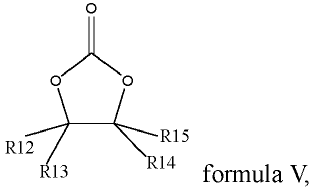
wherein R12 to R15 each independently represent any one of a halogen group, C1-C3 alkyl, or C1-C3 halogenated alkyl;
optionally, the cyclic carbonate is any one or more selected from the group consisting of ethylene carbonate, fluorinated ethylene carbonate, difluoroethylene carbonate, propylene carbonate, fluorinated propylene carbonate, difluoropropylene carbonate, and trifluoropropylene carbonate.

9. The non-aqueous electrolyte according to any one of claims 1 to 8, wherein the lithium salt is any one or more selected from the group consisting of lithium bis(fluorosulfonyl)imide, lithium bis(trifluoromethanesulphonyl)imide, lithium bis(pentafluoroethanesulfonyl)mide, lithium hexafluorophosphate, lithium perchlorate, lithium tetrafluoroborate, lithium hexafluoroarsenate, lithium trifluoromethanesulfonate, lithium bis(oxalate)borate, and lithium difluoro(oxalato) borate.

10. The non-aqueous electrolyte according to any one of claims 1 to 9, wherein the orthocarbonate is tetramethyl orthocarbonate or tetraethyl orthocarbonate; the chain carbonate is any one of dimethyl carbonate, diethyl carbonate, fluorinated dimethyl carbonate, or fluorinated diethyl carbonate; the cyclic carbonate is any one selected from fluorinated ethylene carbonate, fluorinated propylene carbonate, or difluoropropylene carbonate; and the lithium salt is lithium bis(fluorosulfonyl)imide or lithium bis(trifluoromethanesulphonyl)imide;
optionally, the orthocarbonate is tetramethyl orthocarbonate; the chain carbonate is dimethyl carbonate; the cyclic carbonate is fluorinated ethylene carbonate; and the lithium salt is selected from lithium bis(fluorosulfonyl)imide or lithium bis(trifluoromethanesulphonyl)imide.

11. A secondary battery, comprising a positive electrode plate, a negative electrode plate, an electrolyte, and a separator, wherein the electrolyte is the non-aqueous electrolyte according to any one of claims 1 to 10; and the negative electrode plate comprises lithium metal.

12. The secondary battery according to claim 11, wherein the negative electrode plate comprises a current collector and a negative electrode active layer, wherein the negative electrode active layer is lithium metal or lithium alloy; and optionally, the lithium alloy comprises any one of tin, zinc, aluminum, magnesium, silver, gold, gallium, indium, foil, boron, carbon, or silicon, and lithium metal.

13. A battery module, comprising the secondary battery according to claim 11 or 12.

14. A battery pack, comprising the battery module according to claim 13.

15. An electrical device, comprising the secondary battery according to claim 11 or 12, the battery module according to claim 13, or the battery pack according to claim 14.
